# FASCICULE DE BREVET EUROPEEN

(11) **EP 1 336 287 B1**
(45) Date de publication et mention de la délivrance du brevet: **14.04.2004**
(21) Numéro de dépôt: 01997933.5
(22) Date de dépôt: 16.11.2001
(51) Int. Cl.: H04M 1/00, H04L 9/32, H04Q 7/38, G07C 9/00, H04Q 7/32

(54) **APPEL DEPUIS UN TERMINAL RADIOTELEPHONIQUE**
ANRUFEN VON EINEM FUNKFERNSPRECHENDGERÄT
CALLING FROM A RADIOTELEPHONE TERMINAL

(30) Priorité: 22.11.2000 FR 0015161
(43) Date de publication de la demande: 20.08.2003
(73) Titulaire: FRANCE TELECOM, 75015 Paris (FR)
(72) Inventeur: LANIEPCE, Sylvie, F-14350 Le Beny le Bocage (FR); GUERIN, Didier, F-14000 Caen (FR)
(74) Mandataire: Cabinet Martinet & Lapoux
(86) Numéro de dépôt international: PCT/FR2001/003594
(87) Numéro de publication internationale: WO 2002/043355

(56) Documents cités:
- DE-A- 19 653 712
- GB-A- 2 222 288
- US-A- 5 661 806
- US-A- 6 084 968

## Description

La présente invention concerne l'établissement d'un appel sortant depuis un terminal radiotéléphonique mobile équipé d'un capteur biométrique vers un terminal récepteur qui, préalablement à l'exécution de commandes émises par le terminal mobile, nécessite une authentification du terminal émetteur des commandes.

Dans l'état de la technique différents mécanismes d'authentification sont connus (exemples: US 5 661 806, US 6 084 968).

Dans les terminaux radiotéléphoniques mobiles intégrant un capteur biométrique, généralement un capteur d'empreinte digitale, l'empreinte biométrique de l'usager propriétaire du terminal reconnue par le capteur est utilisée à la place d'un code confidentiel PIN (Personal Identification Number) prémémorisé dans la carte d'identité amovible SIM (Subscriber Identity Module) incluse dans le terminal, de manière à activer les moyens fonctionnels liés au clavier du terminal. Dans d'autres terminaux, le capteur biométrique est lié à une touche très souvent utilisée, telle qu'une touche de navigation ou de curseur.

Le capteur biométrique sert à n'autoriser l'usage du terminal mobile que par l'usager propriétaire, ou par des utilisateurs autorisés par celui-ci, si la carte SIM sait reconnaître les empreintes biométriques de ceux-ci.

Par ailleurs, des capteurs de reconnaissance biométrique sont intégrés de plus en plus souvent dans des équipements, tels que des équipements informatiques ou de télécommunications notamment. Les caractéristiques biométriques des utilisateurs, appelées références biométriques, sont enregistrées dans ces équipements lors d'une phase préliminaire dite enrôlement. Il en résulte une multitude de lieux de stockage simultanés des références biométriques. La référence biométrique étant une donnée personnelle à l'utilisateur, la dispersion de celle-ci va à l'encontre de la confidentialité de celle-ci et rend méfiant l'utilisateur soucieux sur le devenir de cette donnée. Il peut en effet craindre le vol, la perte ou l'utilisation abusive de cette donnée.

Les techniques d'authentification biométriques identifient réellement une personne puisqu'elles exploitent ce que la personne "est", par exemple l'empreinte digitale de la personne, et non simplement ce que la personne possède, tel que badge, ou connaît, tel qu'un code secret. Toutefois, les techniques d'authentification biométriques sont des sciences statistiques qui présentent principalement deux taux d'erreurs de reconnaissance : un taux de personnes rejetées à tort FRR (False Rejected Rate) lorsqu'une personne dont la caractéristique biométrique a été enregistrée n'est pas reconnue ; et un taux de personnes acceptées à tort FAR (False Accepted Rate) lorsqu'une personne présentant une caractéristique biométrique "usurpée", réussit à être reconnue.

Ces imperfections intrinsèques à la biométrie autorisent tout individu à "tenter sa chance" pour frauder un système de contrôle d'accès. Par exemple, cet individu peut apposer simplement dans la rue son doigt sur le capteur d'empreinte digitale qui serait intégré dans la portière d'une automobile. Si l'utilisateur a la chance de participer à un taux FAR, le système est fraudé.

L'authentification biométrique ne peut donc à elle seule garantir qu'un utilisateur dont l'empreinte biométrique a été reconnue, est autorisé à accéder à un service ou une commande.

L'invention fait également appel à l'authentification d'un terminal radiotéléphonique mobile basée sur la cryptographie, mise en oeuvre entre la carte d'identité SIM et des moyens d'enregistrement fixes du réseau de radiotéléphonie à travers lequel le terminal communique. Cette authentification permet uniquement d'authentifier le terminal mobile à distance mais nullement son utilisateur. En effet, la mise en oeuvre de la carte d'identité SIM assure que l'utilisateur du terminal mobile connaît le code PIN mémorisé dans la carte ou est reconnu biométriquement par la carte SIM, mais sans garantir au réseau que le service est bien demandé par l'utilisateur autorisé.

Lorsque le code PIN ou le capteur biométrique est désactivé pour des raisons pratiques ou d'ergonomie notamment, la procédure d'identification de l'utilisateur est alors inexistante. En d'autres termes, il n'y a aucun lien entre l'identification de l'utilisateur par la carte SIM et l'authentification du terminal mobile par le réseau.

La présente invention vise à remédier à la dispersion de la référence biométrique de chaque utilisateur pour privilégier un seul lieu de stockage privé et personnel à l'utilisateur. Plus précisément, l'invention a pour objectif d'utiliser le terminal mobile d'un utilisateur, comme moyen de stockage privé et personnel de sa référence biométrique, afin de la combiner à toute authentification du terminal par le réseau, ou par un terminal appelé lié intimement à l'usager du terminal mobile appelant.

A cette fin, un procédé pour établir un appel sortant depuis un terminal mobile d'un usager dans un réseau de radiotéléphonie vers un deuxième terminal, comprenant une authentification du terminal mobile par des moyens d'enregistrement fixes dans le réseau de radiotéléphonie, et un appel du deuxième terminal par les moyens fixes, est caractérisé en ce qu'il comprend une application du résultat d'une authentification biométrique de l'usager dans le terminal mobile et d'un résultat prédéterminé respectivement à des algorithmes identiques de l'authentification du terminal mobile implémentés respectivement dans le terminal mobile et les moyens fixes, une comparaison dans les moyens fixes d'une signature produite par l'algorithme dans le terminal mobile et transmise par celui-ci à un résultat de signature produit par l'algorithme dans les moyens fixes, une transmission d'un identifiant du terminal mobile depuis les moyens fixes au deuxième terminal appelé seulement lorsque la signature et le résultat comparés sont identiques, et une identification du terminal mobile par le deuxième terminal afin que le deuxième terminal n'accepte l'appel sortant que lorsque le deuxième terminal a reconnu l'identifiant transmis.

L'invention est défini dans les revendications indépendantes 1, 15, 16 et 17; et des caractéristiques complémentaires sont définies dans les revendications dépendantes 2 à 14.

L'invention combine ainsi plusieurs mécanismes jusqu'alors dissociés :
- l'authentification biométrique de l'usager dans le terminal mobile ;
- l'authentification du terminal radiotéléphonique mobile, c'est-à-dire en pratique, l'authentification de la carte d'identité SIM contenue dans le terminal mobile, par un moyen intermédiaire participant à l'appel sortant par le terminal mobile ; le moyen intermédiaire peut être les moyens fixes du réseau de radiotéléphonie, ou bien selon une autre réalisation, le deuxième terminal demandé lui-même ;
- l'authentification éventuelle du moyen intermédiaire participant à l'appel par le deuxième terminal.

Pour mettre en défaut cette combinaison, l'utilisateur doit d'une part participer à un taux FAR sur le terminal mobile, et d'autre part utiliser le terminal mobile précisément reconnu par le moyen intermédiaire.

La transmission de l'identifiant est de préférence sécurisée par des algorithmes de cryptographie à clés asymétriques qui sont implémentés dans les moyens fixes et le terminal récepteur et qui dépendent d'une variable aléatoire transmise de l'un des moyens fixes et deuxième terminal vers l'autre, ou générée dans les moyens fixes et le deuxième terminal par exemple par des horloges. En variante, la sécurisation est obtenue par des algorithmes de cryptographie à clé symétriques, par exemple des hachages à sens unique.

Selon une autre réalisation, des droits d'accès sont cédés à un utilisateur grâce à une carte additionnelle remise par l'usager. La transmission de l'identifiant de terminal mobile depuis les moyens fixes après l'appel du deuxième terminal est remplacée par une connexion du terminal mobile et du deuxième terminal récepteur à travers les moyens fixes, une vérification de la présence d'une carte additionnelle amovible dans le terminal mobile par le deuxième terminal, et la transmission de préférence sécurisée d'un identifiant de la carte additionnelle depuis le terminal mobile au deuxième terminal afin que le deuxième terminal identifie le terminal mobile en fonction de l'identifiant de carte transmis. De préférence, des droits d'accès dans le deuxième terminal ne sont modifiés qu'en réponse à un identifiant d'un terminal prédéterminé transmis par les moyens fixes.

L'invention concerne également un terminal radiotéléphonique mobile, des moyens d'enregistrement fixes dans le réseau de radiotéléphonie, et un deuxième terminal, par exemple un terminal récepteur de commande domotique, pour la mise en oeuvre du procédé d'établissement d'appel sortant selon l'invention.

Le terminal radiotéléphonique mobile d'un usager dans un réseau de radiotéléphonie pour la mise en oeuvre du procédé selon l'invention pour établir un appel sortant comprend un moyen d'authentification biométrique de l'usager et est caractérisé par un moyen d'implémentation d'un algorithme de l'authentification du terminal mobile par le réseau, auquel un résultat de l'authentification biométrique de l'usager, une clé prémémorisée et un nombre aléatoire qui est transmis par le réseau sont appliqués afin de transmettre une signature aux moyens fixes.

Les moyens d'enregistrement fixes dans un réseau de radiotéléphonie pour mettre en oeuvre le procédé selon l'invention pour établir un appel sortant depuis un terminal mobile d'un usager dans le réseau de radiotéléphonie vers un deuxième terminal à travers les moyens fixes, sont caractérisés par un moyen d'implémentation d'un d'algorithme de l'authentification du terminal mobile auquel un résultat prédéterminé dépendant d'une authentification biométrique de l'usager, une clé prémémorisée et un nombre aléatoire transmis par les moyens fixes au terminal mobile sont appliqués afin de comparer une signature transmise par le terminal mobile à un résultat de signature produit par l'algorithme et d'appeler le deuxième terminal lorsque la signature et le résultat de signature sont identiques. Les moyens fixes peuvent comprendre un moyen pour transmettre un identifiant du terminal mobile au deuxième terminal après appel de celui-ci, c'est-à-dire lorsque la signature et le résultat comparés sont identiques.

Le deuxième terminal pour mettre en oeuvre le procédé selon l'invention pour établir un appel sortant depuis un terminal mobile d'un usager dans un réseau de radiotéléphonie est caractérisé par un moyen pour identifier le terminal mobile en fonction d'un identifiant du terminal mobile transmis par des moyens d'enregistrement fixes dans le réseau de radiotéléphonie, après une authentification biométrique de l'usager dans le terminal mobile et une authentification du terminal mobile par les moyens fixes, afin de n'accepter l'appel sortant que lorsque le deuxième terminal a reconnu l'identifiant transmis.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de télécommunication mettant en oeuvre le procédé d'authentification selon l'invention ;
- la figure 2 est un algorithme d'étapes d'authentification d'usager et de terminal mobile entre un terminal mobile et un réseau de radiotéléphonie pour l'établissement d'un appel sortant vers un terminal récepteur de commande, selon l'invention ;
- la figure 3 est un algorithme d'étapes de confirmation d'authentification au terminal récepteur de commande, selon l'invention ;
- la figure 4 est une variante de l'algorithme de la figure 3, relative à une sécurisation par hachage ;
- la figure 5 est un algorithme d'authentification et de confirmation avec délégation de droits à des terminaux d'utilisateurs délégués ; et
- la figure 6 est un algorithme d'authentification et de confirmation avec délégation de droits par carte additionnelle.

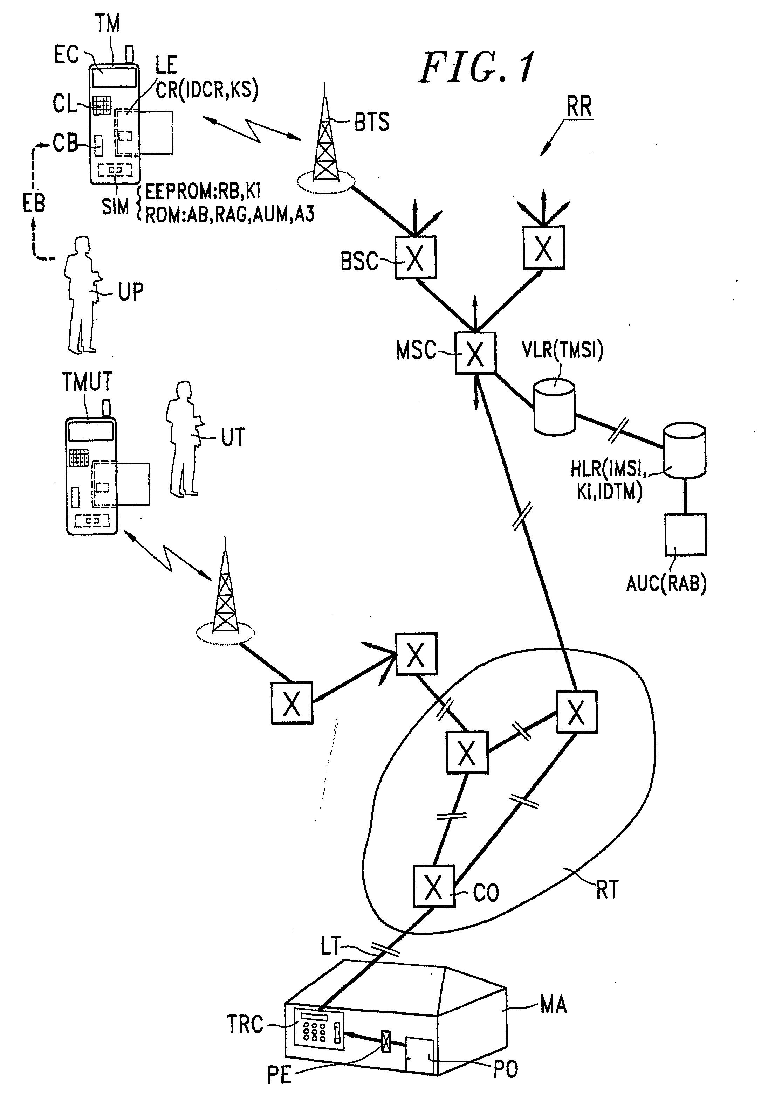

En référence à la figure 1, un système de télécommunication pour la mise en oeuvre du procédé d'authentification selon l'invention comprend essentiellement un terminal radiotéléphonique mobile TM d'un usager propriétaire UP, un réseau de radiotéléphonie cellulaire RR auquel est abonné l'usager UP, et un deuxième terminal, dit terminal récepteur de commande TRC.

A titre d'exemple non limitatif, le système concerne une application domotique pour un contrôle d'accès à distance par l'intermédiaire d'une centrale téléphonique domotique constituant le terminal récepteur TRC relié au réseau de radiotéléphonie RR par une ligne de télécommunication LT d'un commutateur CO dans un réseau de télécommunication RT, tel que le réseau téléphonique commuté RTC. Le terminal récepteur TRC est relié par voie radioélectrique et/ou par câble à divers appareils et détecteurs, notamment à un portier électronique PE pour ouvrir une porte d'entrée PO, ou un portail d'entrée, ou une porte de garage de la maison MA de l'usager propriétaire UP. Comme on le verra dans la suite, l'usager UP devant le portier PE ne dispose que du terminal mobile TM et d'une empreinte biométrique EB, comme moyen d'accès jouant le rôle de clé, pour commander l'activation du portier PE au moyen d'une commande COM transmise au terminal récepteur TRC.

En variante, le terminal récepteur TRC est un terminal mobile desservi par le réseau RR ou par un autre réseau de radiotéléphonie. Par exemple, le terminal récepteur TRC est intégré à une automobile et commande le dispositif de fermeture centralisée automatique des portières de celle-ci.

De manière plus générale, le réseau RT incorpore tout réseau de télécommunication y compris au moins un réseau de téléphonie commuté RTC, et un réseau à haut débit RHD du type internet, desservant plusieurs terminaux récepteurs installés par exemple au domicile, dans l'automobile et un lieu professionnel de l'usager UP.

Le terminal mobile TM est un poste radiotéléphonique mobile portable autonome classique, par exemple de type GSM 900, DCS 1800 ou UMTS, auquel on se référera ci-après, ou bien tout autre outil ou dispositif mobile de télécommunication personnel et privé, tel qu'assistant numérique personnel PDA (Personal Digital Assistant) ou un micro-ordinateur portable équipé d'un module d'émission-réception radiotéléphonique. De manière connue, le terminal TM comporte une interface homme-machine dotée d'un clavier CL et/ou d'un dispositif de dialogue vocal, d'un écran EC, d'un microphone, d'un haut-parleur et d'un capteur biométrique CB. Le capteur CB capte une empreinte biométrique EB de l'usager UP qui peut être une empreinte digitale d'un doigt ou de plusieurs doigts, ou une empreinte vocale pouvant être combinée à un message prédéterminé confidentiel, l'iris de l'oeil, une partie de la face de l'utilisateur, etc. Le capteur CB est d'un type connu, par exemple basé sur une analyse d'image, et/ou de pression, et/ou de température, produisant un signal électrique représentatif de l'empreinte biométrique captée.

Le terminal TM contient également un module à microcontrôleur amovible, dit carte d'identité d'usager SIM (Subscriber Identity Module), relié à l'interface homme-machine du terminal. Dans le microcontrôleur de la carte SIM, une mémoire non volatile EEPROM contient toutes les particularités du profil de l'usager, notamment l'identité internationale IMSI (International Mobile Subscriber Identity) de l'usager UP, l'identité TMSI temporairement attribuée à l'usager, un profil d'abonnement au réseau RR pour l'usager, un numéro international d'annuaire d'usager MSISDN (Mobile Station ISDN Number) utile pour appeler le terminal TM, un répertoire privé de numéros téléphoniques, notamment le numéro NTRC du terminal récepteur TRC, et des données de sécurité, telles qu'une clé d'authentification Ki.

La mémoire EEPROM a prémémorisé, en outre selon l'invention, une référence biométrique numérique RB de l'empreinte biométrique de l'usager UP pour être comparée à celle produite par le capteur CB en fonction de l'empreinte captée EB.

Une mémoire non réinscriptible ROM du microcontrôleur de la carte SIM contient le système d'exploitation de la carte ainsi que diverses applications spécifiques.

Selon l'invention, au moins un algorithme d'authentification biométrique AB et un algorithme d'authentification d'usager et de mobile AUM et optionnellement un algorithme d'authentification de mobile A3 sont écrits essentiellement dans les mémoires ROM et EEPROM.

L'algorithme AUM, ou les algorithmes AUM et A3, remplacent un algorithme d'authentification connu A3 selon la norme GSM pour authentifier le terminal mobile TM, c'est-à-dire la carte SIM contenue dans celui-ci, par un centre d'authentification AUC du réseau de radiotéléphonie RR.

Selon une deuxième réalisation décrite beaucoup plus loin, le terminal mobile TM comprend un lecteur de carte à puce additionnelle LE. Une carte additionnelle CR personnelle à l'usager propriétaire UP contient un identifiant de carte personnel IDCR à la place d'un identifiant de terminal mobile IDTM fourni par le réseau RR.

Dans la figure 1 sont également représentés schématiquement des moyens fixes principaux du réseau de radiotéléphonie RR de type GSM à titre d'exemple, reliant à un instant donné le terminal radiotéléphonique mobile TM au terminal récepteur TRC. Les moyens fixes principaux sont une station de base courante BTS couvrant radioélectriquement la cellule courante dans laquelle se trouve momentanément le terminal mobile TM, un contrôleur de station de base BSC et un commutateur de service mobile MSC. Le commutateur MSC est relié à au moins un commutateur CO ou un moyen équivalent dans le réseau RT et est associé à un enregistreur de localisation des visiteurs VLR. L'enregistreur VLR gère au moins une zone de localisation (Location Area) de quelques cellules du réseau RR et enregistre provisoirement des identités et profils d'usagers, c'est-à-dire de cartes SIM, se trouvant dans cette zone.

Le réseau de radiotéléphonie RR comprend également au moins un enregistreur de localisation nominal HLR relié à des commutateurs du service mobile MSC à travers le réseau de signalisation du réseau de radiotéléphonie RR. L'enregistreur HLR contient principalement une base de données enregistrant pour chacun des terminaux mobiles prédéterminés, en l'occurrence le terminal TM, l'identité internationale IMSI de l'usager UP propriétaire de la carte SIM inclus dans le terminal, le numéro d'usager MSISDN et le profil d'abonnement de l'usager, et le numéro de l'enregistreur VLR desservant temporairement le terminal mobile TM et mis à jour lors de transferts entre zones de localisation.

L'enregistreur HLR est associé à un centre d'authentification AUC authentifiant les terminaux mobiles couverts par les cellules desservies par les commutateurs MSC qui sont reliés à l'enregistreur HLR. En particulier selon l'invention, le centre AUC gère l'algorithme d'authentification AUM et optionnellement l'algorithme A3 et utilise la clé d'authentification Ki attribuée uniquement à l'usager UP désigné par son identité IMSI et mémorisée dans l'enregistreur de localisation nominal HRL lors de l'abonnement de l'usager UP au service du réseau de radiotéléphonie RR. Le centre d'authentification AU contient également un générateur pseudo-aléatoire de nombres aléatoires RAND.

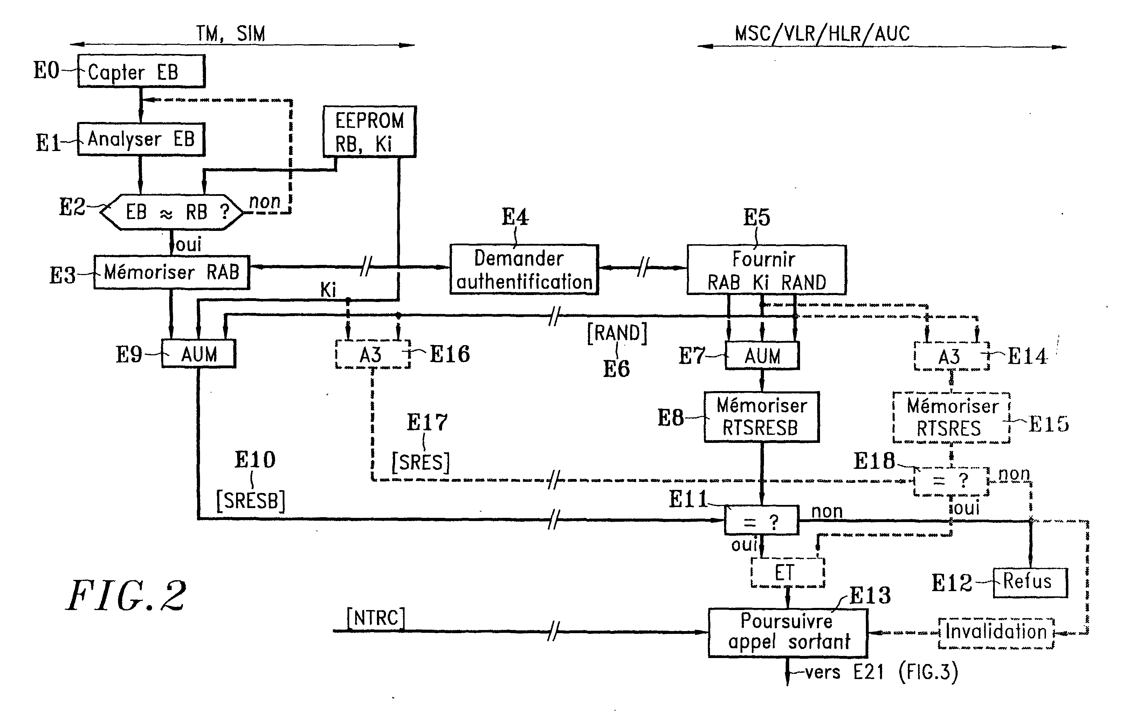

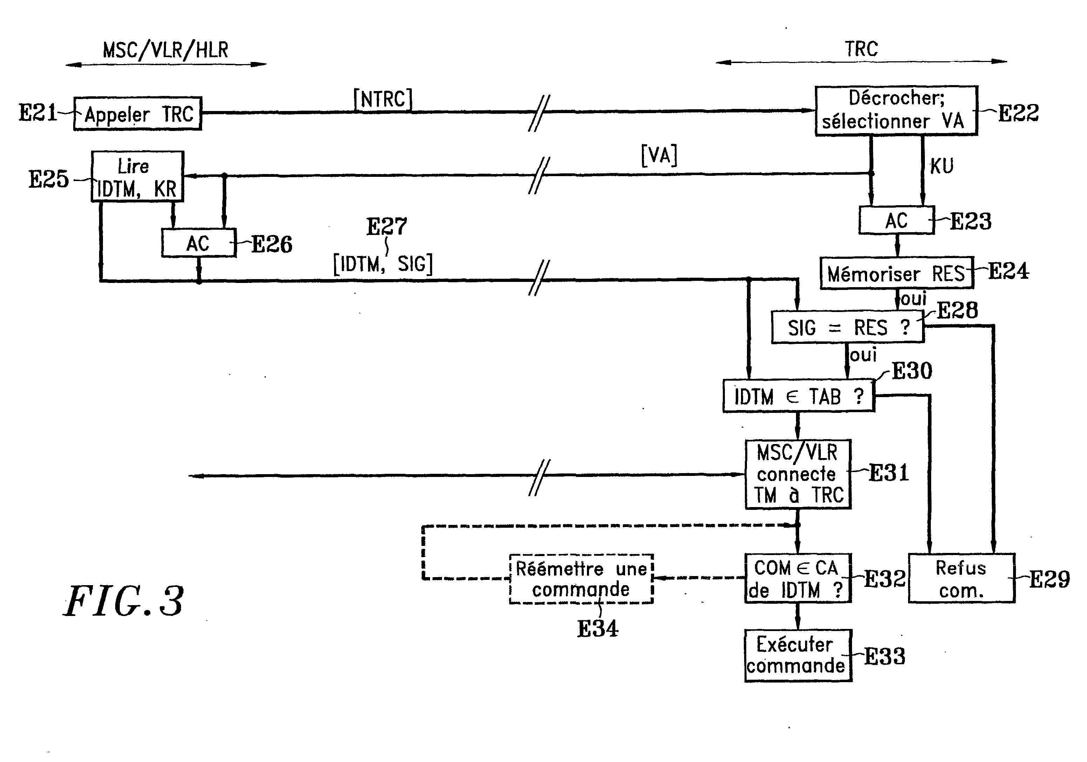

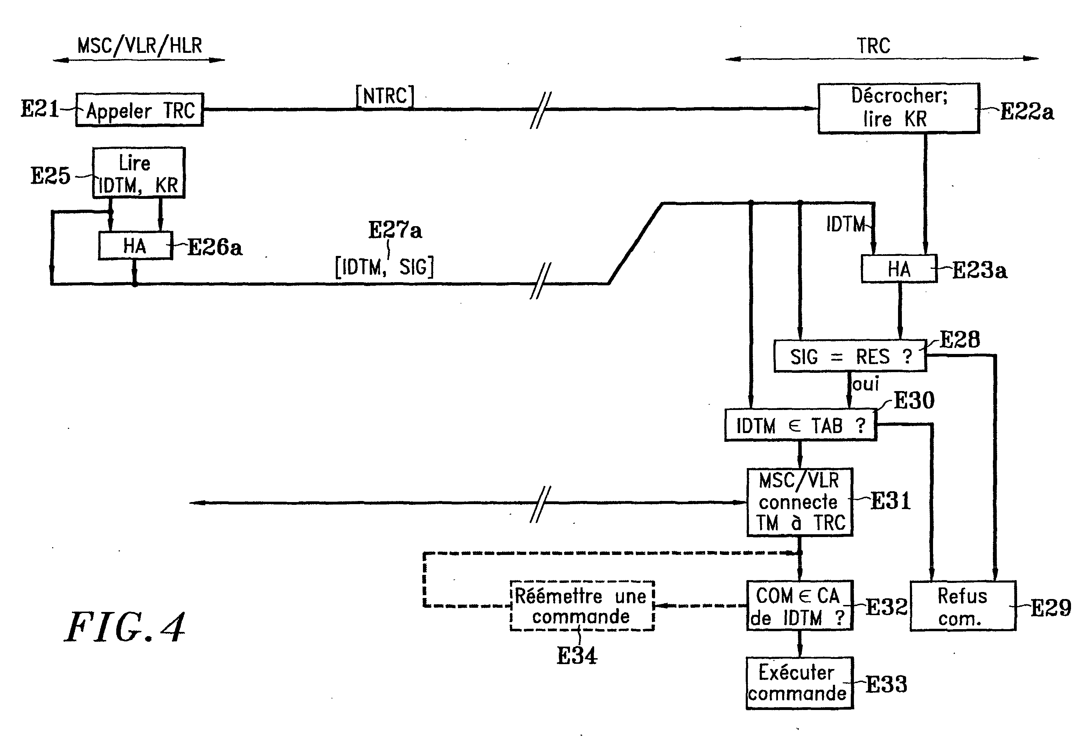

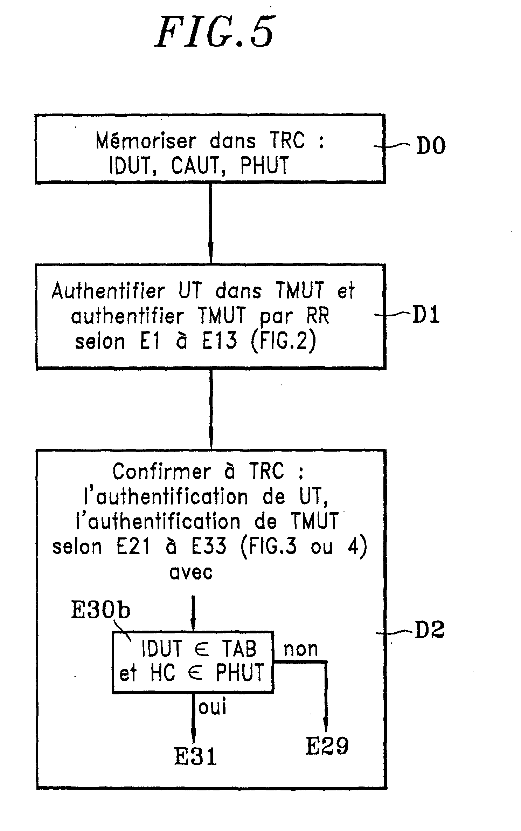

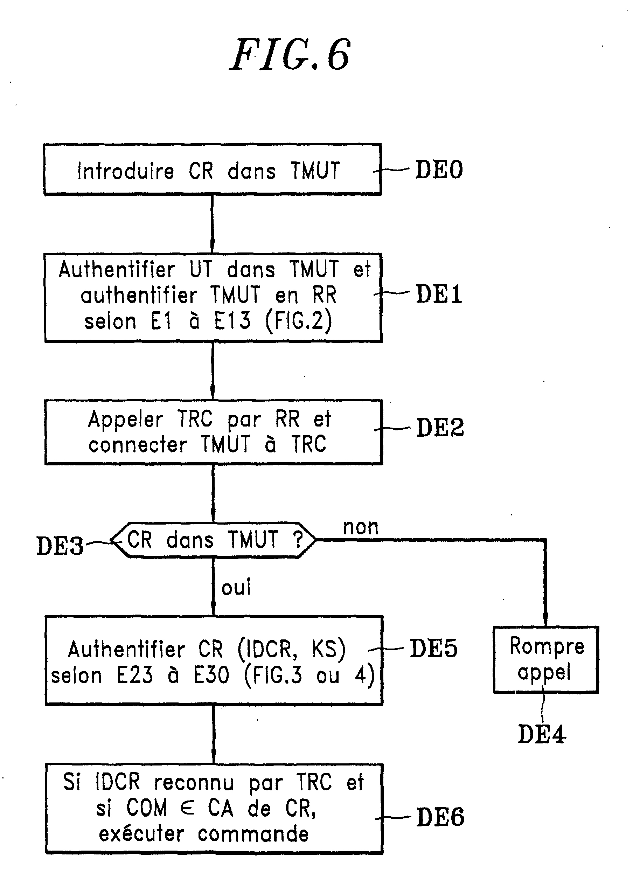

Le procédé d'établissement d'appel sortant selon une première réalisation de l'invention comprend des étapes d'authentification suivantes E10 à E13 montrées à la figure 2, puis des étapes de confirmation sécurisée d'authentification E21 à E33 montrées à la figure 3.

Initialement à l'étape E0, le terminal radiotéléphonique mobile TM contenant la carte SIM de l'usager propriétaire UP est mis en marche en appuyant sur la touche marche/arrêt du terminal, ce qui affiche à l'écran EC un message d'invitation à présenter l'empreinte biométrique EB par l'usager propriétaire UP sur le capteur biométrique EB. A l'étape E1, le capteur CB analyse l'empreinte EB pour extraire des caractéristiques physiques et les comparer à la référence biométrique RB de l'usager UP mémorisée dans la mémoire EEPROM de la carte SIM, selon l'algorithme d'authentification biométrique AB. L'usager UP est réputé authentifié à l'étape E2 lorsque la similarité entre les caractéristiques de l'empreinte captée EB et la référence biométrique RB est supérieure à un seuil prédéterminé. Un résultat d'authentification biométrique RAB tel qu'un mot prédéterminé est alors écrit dans la mémoire EEPROM de la carte SIM à l'étape E3, et atteste que l'authentification biométrique d'usager est réussie. Le résultat prédéterminé RAB est également connu du centre d'authentification AUC. Sinon, l'authentification a échoué à l'étape E2, et l'authentification suivante E5 à E13 du terminal mobile TM par les moyens fixes VLR, HLR, AUC n'est pas effectuée. De préférence, l'usager est invité à représenter son empreinte EB sur le capteur CB, par exemple deux ou trois fois.

Après l'étape E3, si cela n'a pas déjà été effectué, l'usager UP compose ou sélectionne le numéro NTRC du terminal TRC et valide cette opération pour que le terminal TM transmette une demande de service au réseau RR et ce dernier demande l'authentification du terminal mobile. Une demande analogue est également prévue lors de la mise à jour de la localisation du terminal TM au cours de l'itinérance de celui-ci, suite à un transfert intercellulaire (handover). Dans la figure 2, la demande de service et d'authentification est indiquée schématiquement par l'étape E4, et fait intervenir les moyens fixes du réseau de radiotéléphonie RR, et plus précisément l'enregistreur local VLR, l'enregistreur de localisation nominal HRL et le centre d'authentification AUC.

En variante, l'authentification biométrique est effectuée systématiquement préalablement à tout appel sortant après composition ou sélection du numéro d'appel NTRC du terminal récepteur TRC dans le terminal mobile. Par exemple, l'empreinte EB est présentée en apposant simplement un doigt sur une touche de validation, telle que touche de décrochage, munie du capteur biométrique CB pour valider la procédure d'appel, après la composition ou la sélection du numéro d'appel NTRC.

La "demande d'authentification" à l'étape E4 déclenche l'authentification du terminal mobile TM par le centre d'authentification AUC du réseau RR à l'étape suivante E5. Le générateur pseudo-aléatoire dans le centre AUC produit un nombre aléatoire RAND ayant une longueur prédéterminée, ou en variante l'enregistreur HLR sélectionne l'un RAND de plusieurs nombres aléatoires fournis initialement par le centre AUC à l'enregistreur HLR, en association avec l'identité IMSI de l'usager UP lors de son abonnement. Ainsi après l'étape E5, l'enregistreur HLR transmet le nombre aléatoire RAND au terminal TM à l'étape E6. Simultanément, le nombre RAND, la clé d'authentification Ki associée à l'usager UP et le résultat RAB lus par le centre AUC sont appliqués à l'algorithme d'authentification AUM implémenté dans le centre AUC. Un résultat RTSRESB de réponse signée biométrique fourni par l'algorithme AUM est mémorisé dans les enregistreurs HLR et VLR à l'étape E8.

Dans la carte SIM du terminal TM, en réponse au nombre aléatoire RAND transmis à l'étape E6, le résultat d'authentification biométrique RAB et la clé d'authentification Ki sont lus dans la mémoire EEPROM de la carte SIM pour être appliqués avec le nombre reçu RAND à l'algorithme d'authentification AUM dans la carte SIM, à l'étape E9. L'algorithme AUM produit une réponse signée biométrique SRESB qui est transmise par la carte SIM via le terminal TM à l'enregistreur VLR, à l'étape E10.

Finalement, l'enregistreur VLR lit le résultat précédemment mémorisé RTSRESB et le compare à la réponse reçue SRESB à l'étape E11. Si la réponse SRESB est différente du résultat RTSRESB, le commutateur MSC est commandé par l'enregistreur VLR pour déconnecter le terminal du réseau à l'étape E12, et en particulier pour refuser l'établissement d'un appel de départ demandé, en l'occurrence relatif au terminal récepteur TRC.

En variante de l'étape E12 montrée en traits pointillés dans la figure 2, l'enregistreur VLR poursuit l'appel par l'étape suivante E13, en transmettant une invalidation d'authentification au terminal récepteur TRC à une prochaine étape E27 (figure 3) ; le terminal TRC ayant pris l'appel gère alors lui-même cette invalidation par exemple en raccrochant ou en limitant les services offerts.

En revanche, pour un résultat RTSRESB égal à la réponse signée biométrique SRESB, l'enregistreur VLR valide l'authentification biométrique de l'usager et l'authentification du terminal mobile et autorise à ce que le commutateur MSC procède à l'établissement de l'appel sortant demandé avec le terminal TRC à l'étape E13, notamment par échanges de messages chiffrés entre le terminal TM et le réseau RR. La réponse signée SRESB transmise par le terminal mobile TM ne peut être alors identique à un résultat précédent de l'algorithme d'authentification AUM retransmis sous le contrôle d'une personne malintentionnée puisque le nombre aléatoire RAND est différent d'une authentification à la suivante et est produit par le centre d'authentification AUC du réseau lui-même.

Ainsi, les étapes d'authentification E5 à E13 sont comparables à celles déjà mises en oeuvre dans un terminal de réseau GSM, ce qui ne modifie pas globalement les échanges entre le terminal TM et le réseau RR. On remarquera que le résultat RAB participe au déroulement de l'algorithme AUM, au même titre que le nombre aléatoire RAND et la clé Ki, et n'est pas un simple signal déclenchant ou non l'algorithme AUM.

En variante optionnelle montrée en trait pointillé à la figure 2, le procédé d'établissement d'appel comprend des étapes supplémentaires E14 à E17, parallèles et analogues aux étapes d'authentification E7 à E11 dépendant du résultat RAB de l'authentification biométrique, pour authentifier le terminal mobile TM par les moyens d'enregistrement fixes VLR, HLR, AUC du réseau RR d'une manière connue, indépendamment du résultat RAB de l'authentification biométrique E1-E2.

Parallèlement aux étapes E7 et E8 après l'étape E5, le centre d'authentification AUC applique le nombre aléatoire RAND et la clé Ki également à l'algorithme d'authentification A3 pour authentifier le mobile TM par le réseau RR, et les enregistreurs HLR et VLR mémorisent un résultat de réponse signé RTSRES produit par l'algorithme A3 et délivré par le centre d'authentification, aux étapes E14 et E15.

A l'étape E16 parallèle à l'étape E9, la clé lue Ki dans la mémoire EEPROM de la carte SIM et le nombre aléatoire RAND transmis par l'enregistreur HLR à l'étape E6 sont appliqués à l'algorithme A3 également implémenté en mémoire ROM dans la carte SIM. L'algorithme A3 produit une réponse signée SRES transmise par la carte SIM à l'enregistreur VLR à l'étape E17.

L'enregistreur VLR compare le résultat mémorisé RTSRES et la réponse reçue SRES à l'étape E18. Si la réponse SRES est différente du résultat RTSRES, ou si à l'étape E11, la réponse SRESB transmise à l'étape E10 est différente du résultat RTSRESB lu à l'étape E8, l'enregistreur VLR commande le commutateur associé MSC à refuser la communication demandée à l'étape E12, ou bien poursuit l'appel en transmettant une invalidation d'authentification au terminal TRC selon la variante précitée de l'étape E12. Par contre, lorsque les résultats RTSRESB et RTSRES sont respectivement identiques aux réponses signées reçues SRESB et SRES aux étapes E11 et E18, le commutateur MSC est autorisé par l'enregistreur VLR à poursuivre l'établissement de l'appel sortant demandé à l'étape E13. En particulier, les messages échangés entre le terminal TM et les moyens fixes, tels qu'au moins la station de base courante BTS, du réseau RR sont chiffrés. Le numéro téléphonique composé ou sélectionné NTRC du terminal demandé TRC est transmis par le terminal TM au couple MSC/VLR et à l'enregistreur nominal HLR.

Puis, le réseau RR confirme l'authentification de l'usager UP et l'authentification du terminal TM au terminal récepteur de commande TRC en appelant celui-ci à travers le réseau RT à l'étape suivante E21. Comme montré à la figure 3, la confirmation des authentifications positives de l'usager UP et du terminal TM par le réseau RR au terminal récepteur TRC est effectuée aux étapes suivantes E22 à E34 par une transmission sécurisée d'un identifiant IDTM du terminal mobile TM au terminal récepteur TRC. Par exemple, l'identifiant IDTM est le numéro international d'usager MSISDN mémorisé dans l'enregistreur HLR.

En réponse à l'appel du terminal TRC par le commutateur MSC à travers le réseau de télécommunication RT, le terminal demandé TRC prend la ligne LT, c'est-à-dire simule un décrochage, et produit une variable aléatoire VA pour la transmettre à l'enregistreur VLR associé au commutateur MSC, à l'étape E22. Le terminal TRC applique également la variable VA avec une clé publique KU à un algorithme cryptographique à clé publique AC à l'étape E23 et mémorise un résultat RES à l'étape E24. La variable aléatoire VA est produite par un générateur pseudo-aléatoire dans le terminal TRC.

En variante, la variable aléatoire VA est l'heure de la réception de l'appel E21, par exemple exprimée au centième de seconde près. Dans cette variante, la variable VA est générée par une horloge incluse dans le terminal TRC et n'est pas transmise à l'enregistreur VLR qui comporte également une horloge qui génère la variable VA dès la transmission de l'appel E21, en synchronisme avec la variable VA produite dans le terminal TRC.

Dans l'enregistreur VLR à l'étape E25, une clé privée KR, que le réseau RR est seul à connaître, et l'identifiant IDTM du terminal TM sont lus dans l'enregistreur HLR en réponse à la variable VA transmise à l'étape E22, ou après l'appel à l'étape E21. La clé privée KR et la variable VA reçue, ou en variante fournie par l'horloge, sont appliquées à l'algorithme cryptographique AC également implémenté dans l'enregistreur VLR pour fournir une signature de réseau SIG à l'étape E26. L'enregistreur VLR transmet alors la signature SIG avec l'identifiant IDTM au terminal TRC à l'étape E27. Le terminal TRC compare la signature reçue SIG avec le résultat mémorisé RES à l'étape E28. Si la signature SIG diffère du résultat RES, le terminal TRC refuse la communication à l'étape E29, en procédant à un raccrochage automatique, et le commutateur MSC adresse un message de libération au terminal TM.

Par contre, lorsque la signature SIG et le résultat RES sont identiques, l'identifiant IDTM reçu à l'étape E27 est comparé à des identifiants IDUT de terminaux mobiles prémémorisés dans une table programmable TAB dans le terminal récepteur TRC à l'étape E30. Les identifiants IDUT dans la table TAB identifient respectivement des terminaux autorisés à accéder à certaines commandes et services dispensés par le terminal TRC. En outre, la table TAB fait correspondre à l'identifiant de chaque terminal mobile prédéterminé autorisé une capacité d'accès CA listant la ou les commandes que l'usager du terminal est autorisé à exécuter.

A l'étape E30, si l'identifiant reçu IDTM n'est pas trouvé dans la table TAB, le terminal TRC refuse l'appel sortant, comme à l'étape E29. Le refus de l'appel par le terminal TRC à l'étape E29 peut également résulter de l'invalidation d'authentification transmise avec l'identifiant IDTM par l'enregistreur VLR à l'étape E27, selon la variante précitée de l'étape E12. Sinon, en réponse à l'identifiant transmis IDTM, l'appel sortant est accepté par le terminal TRC qui le signale à l'enregistreur VLR, et le commutateur MSC envoie un message de connexion au terminal mobile TM pour connecter les terminaux TM et TRC, à l'étape E31. Le terminal TM transmet alors une commande COM, par exemple l'activation du portier électronique PE (figure 1), qui est exécutée à l'étape E33 par le terminal TRC si la commande transmise COM appartient à la capacité d'accès CA associée au terminal TM à l'étape E32. Sinon, le terminal TRC invite l'usager UP à réémettre une commande à l'étape E34.

Selon une autre variante montrée à la figure 4, au lieu d'utiliser une variable aléatoire VA et un algorithme d'authentification asymétrique AC à clés KR et KU, l'enregistreur VLR applique d'abord à une étape E26a la clé privée KR et l'identifiant IDTM lus à l'étape E25 à un algorithme de hachage à sens unique HA. L'algorithme de hachage produit une signature SIG qui constitue un code d'authentification de message MAC et qui est transmise avec l'identifiant IDTM à une étape E27a. A une étape E23a succédant à l'étape de décrochage et de sélection de clé E22a, le terminal TRC applique la clé KR et l'identifiant reçu IDTM à l'algorithme de hachage HA, également implémenté dans le terminal TRC, pour produire un résultat RES qui est comparé à la signature reçue SIG à l'étape E28. Puis le procédé se poursuit par les étapes E30 à E33.

Ainsi selon l'invention, l'usager UP dispose de la possibilité d'ouvrir à distance sa maison à tout moment. Suite à un empêchement, il peut déclencher l'ouverture pour une nourrice appelée juste auparavant pour prendre en charge la garde de ses enfants.

En cas de déménagement, ou plus généralement de changement de propriétaire du terminal récepteur TRC, le propriétaire cédant UP remplace l'identifiant IDTM par l'identifiant du nouveau propriétaire acquéreur dans la table TAB. Le nouveau propriétaire peut alors modifier tous les droits d'accès dans la TAB, y compris les identifiants d'utilisateurs autorisés temporaires UT et leurs droits d'accès CA, comme on le verra ci-après.

Si l'usager propriétaire UP change de terminal mobile, sa carte SIM est introduite dans le nouveau terminal sans que le procédé de l'invention soit modifié, puisque la carte SIM contient la référence biométrique RB de l'usager propriétaire.

Lorsque l'authentification de l'usager propriétaire UP est suivie d'un contrôle des droits accordés à l'usager UP, comme indiqué à l'étape E31, des droits d'accès aux commandes susceptibles d'être exécutées par le terminal récepteur TRC peuvent être délégués à un utilisateur tiers UT.

Selon une première délégation, l'usager propriétaire UP délègue ses droits à l'utilisateur UT soit en cédant sa carte SIM, soit en cédant son terminal mobile avec sa carte SIM, lorsque la carte SIM a préalablement mémorisé plusieurs références biométriques RB correspondant aux empreintes biométriques de plusieurs utilisateurs. A l'étape E2 (figure 2), l'empreinte EB captée par le capteur CB du terminal TM, ou de tout autre terminal contenant la carte SIM de l'usager UP, est comparée à toutes les références biométriques, et le résultat RAB n'est produit et mémorisé à l'étape E3 que lorsque la plus grande des similarités entre l'empreinte EB et les références biométriques est supérieure à un seuil prédéterminé.

Selon une deuxième délégation montrée à la figure 5, l'usager propriétaire UP ajoute à une étape initiale DO, l'identifiant IDUT du terminal TMUT d'au moins un utilisateur délégué UT dans la table programmable TAB, en correspondance avec une capacité d'accès respective CAUT et une plage horaire respective PHUT pendant laquelle l'utilisateur UT est autorisé à émettre des commandes listées dans la capacité CAUT.

Ultérieurement, l'utilisateur délégué UT utilise son propre terminal mobile TMUT pour appeler le terminal récepteur TRC, ce qui déclenche une authentification biométrique de l'utilisateur UT dans son terminal mobile TMUT, et une authentification du terminal TMUT par le réseau selon des étapes D1 analogues à celles E1 à E13 montrées à la figure 2. Des moyens fixes MSC, VLR, HLR du réseau de radiotéléphonie RR confirment ensuite l'authentification biométrique de l'utilisateur UT et l'authentification du terminal TMUT de l'utilisateur UT au terminal récepteur TRC selon des étapes D2 analogues à celles E21 à E33 montrés à la figure 3 ou 4, à l'exception de l'étape E30 remplacée par une étape plus complète E30b.

A l'étape E30b, le terminal récepteur TRC vérifie non seulement que l'identifiant IDUT de l'utilisateur délégué UT est bien inscrit dans la table TAB, mais également que l'heure courante HC est incluse dans la plage horaire PHUT. Si l'une ou l'autre de ces conditions n'est pas satisfaite, la communication est refusée à l'étape E29. Par contre, si l'identifiant IDUT a été transmis à une heure courante HC pendant la plage horaire PHUT, le terminal récepteur TRC accepte l'appel sortant depuis le terminal TMUT qui est connecté au terminal TRC à l'étape E31. L'appartenance de chaque commande COM sélectionnée par l'utilisateur UT et transmise par le terminal TMUT, à la capacité d'accès CAUT est ensuite vérifiée à l'étape E32 avant d'exécuter la commande à l'étape E33.

Selon une troisième délégation, les terminaux radiotéléphoniques mobiles TM et TMUT de l'usager propriétaire UP et de tout utilisateur délégué sont équipés chacun d'un lecteur LE d'une carte additionnelle amovible CR, comme montré en trait pointillé à la figure 1. La carte CR est par exemple une simple carte à mémoire, ou bien une carte à microcontrôleur, à contacts ou sans contacts. La mémoire dans la carte CR contient un identifiant de carte IDCR.

Pour cette troisième délégation, le terminal récepteur TRC a enregistré préalablement l'identifiant de carte IDCR à la place de l'identifiant de terminal IDTM.

Pour accéder à une commande ou service dispensé par le terminal TRC, n'importe quel utilisateur UT, y compris l'usager propriétaire UP, introduit la carte additionnelle CR dans le lecteur LE de son propre terminal mobile TMUT à une étape initiale DEO, en référence à la figure 6. L'authentification biométrique de l'utilisateur UT dans le terminal TMUT et l'authentification du terminal TMUT par des moyens fixes du réseau RR sont effectuées selon les étapes DE1 analogues aux étapes E1 à E13 montrées à la figure 2.

Puis le commutateur MSC auquel est rattaché temporairement le terminal TMUT appelle le terminal récepteur TRC et connecte celui-ci au terminal mobile TMUT à travers des moyens fixes correspondants du réseau RR, à une étape DE2.

Le terminal TRC interroge ensuite le terminal TMUT pour vérifier si la carte additionnelle CR est présente dans le terminal TMUT, à une étape DE3. S'il n'y a aucune carte CR, le terminal TMUT rompt la communication à l'étape DE4.

Si la carte CR est présente dans le terminal TMUT, des étapes DE5 analogues aux étapes E23 à E30 sont déroulées pour authentifier la carte CR par le terminal récepteur TRC, mais entre le terminal TMUT, à la place des enregistreurs VLR et HLR, et le terminal récepteur TRC. L'identifiant de terminal IDTM et la clé KR sont remplacés par l'identifiant IDCR et une clé secrète KS lus dans la carte CR à l'étape E25, afin qu'à l'étape E27 (figure 3), E27a (figure 4), l'identifiant de carte IDCR avec une signature SIG soit transmis de manière sécurisée par le terminal TMUT au terminal récepteur TRC et à l'étape E30 l'identifiant de carte IDCR soit cherché dans le terminal récepteur TRC pour identifier le terminal TMUT.

Si à l'étape E30 selon cette troisième délégation, l'identifiant de carte IDCR est reconnu par le terminal récepteur TRC, et si une commande sélectionnée par l'utilisateur UT appartient à la capacité d'accès CA associée à la carte CR, la commande transmise COM est exécutée à l'étape E33, comme montré à des étapes DE6.

L'usager propriétaire UP de la carte CR demande ainsi que le service ne soit rendu par le terminal TRE que si l'utilisateur délégué UT dispose de la carte additionnelle CR. Dès que l'usager UP récupère la carte CR, il prive l'utilisateur UT des droits délégués, sans avoir à modifier immédiatement la table des droits d'accès TAB. La délégation est ainsi gérée en remettant la carte additionnelle CR à un délégué, ce qui ne requiert plus l'identifiant IDUT d'un quelconque utilisateur dans le terminal TRC et donc l'élaboration préalable d'une table de droits d'accès TAB. Tout utilisateur UT possédant la carte CR reçoit les droits accordés à l'usager propriétaire de la carte. La carte additionnelle CR étant amovible, elle peut être utilisée avec n'importe quel terminal mobile.

La carte CR contenant l'identifiant IDCR et étant représentative des droits d'accès de l'usager propriétaire UP de la carte vis-à-vis du terminal récepteur TRC, un vol de la carte CR permet d'accéder de façon frauduleuse aux commandes et services offerts par le terminal TRC. En contrepartie, le voleur de la carte et le terminal mobile dans lequel la carte est insérée sont authentifiés. Le voleur peut être alors localisé, ce qui incite à limiter l'utilisation abusive de la carte CR. Une table d'événements peut être établie par l'opérateur téléphonique du réseau RR et remise à l'usager propriétaire UP du terminal TRC pour découvrir des informations sur une éventuelle utilisation frauduleuse. Un utilisateur "délégué" n'a donc pas intérêt à utiliser la carte CR de manière abusive.

En cédant ses droits par la carte CR, l'usager UP est aussi libre qu'avec un trousseau de clés physiques. L'usager UP peut confier les droits d'ouverture de sa maison à une personne de confiance en son absence. En fonction des besoins, plusieurs cartes identiques peuvent être distribuées à des membres de la famille de l'usager UP, comme des trousseaux de clés.

Lors d'un changement du propriétaire du terminal récepteur TRC, les droits accordés à la carte du propriétaire cédant seront refusés tant que l'identifiant de la carte additionnelle du nouveau propriétaire n'est pas enregistré à la place de l'ancien identifiant IDCR dans le terminal TRC. Une autre solution est de transférer la carte du propriétaire cédant au nouveau propriétaire, comme le transfert d'un trousseau de clés.

Selon les trois délégations précédentes, l'utilisateur délégué UT, celui à qui des droits ont été délégués, ne peut pas, par ailleurs, utiliser un terminal mobile volé puisqu'il ne sera pas reconnu lors de l'authentification biométrique E0-E2. La cession de droits est utile si le terminal récepteur TRC, inclus par exemple dans une automobile dont l'ouverture est effectuée selon le procédé de l'invention, est un objet partagé entre le propriétaire de l'automobile, un garagiste, et une société de location.

Les deuxième et troisième délégations montrées aux figures 5 et 6 peuvent être combinées. L'usager UP cède sa carte CR en ayant préalablement délégué ses droits par modification de la table de droits d'accès TAB. Les deux délégations précédentes sont ainsi associées pour offrir le maximum de possibilités à l'usager propriétaire. Pour la sécurité, l'ajout d'un identifiant utilisateur IDUT dans la table de droits d'accès TAB n'est fait à distance depuis le terminal mobile TM que par l'usager propriétaire UP, et la commande pour modifier la table TAB n'est autorisée qu'en réponse à l'identifiant IDTM de l'usager propriétaire UP qui est transmis par les moyens fixes de réseau VLR, HLR, AUC et qui est reconnu selon la deuxième délégation. Ainsi, même lorsque l'usager UP se sépare de sa carte CR, l'utilisateur délégué UT en ayant l'usage ne peut modifier la table des droits définis par l'usager UP.

L'intégration du capteur biométrique CB sur le terminal mobile TM et non sur le terminal récepteur de commande TRC réduit le risque de personnes tentées d'essayer leur chance et donc le taux de personnes acceptées à tort FAR. La carte additionnelle CR permet de céder des droits sans pour autant céder le terminal mobile TM et éventuellement sans avoir à gérer la table des droits TAB, c'est-à-dire évite un oubli de retrait de droit, une disponibilité pour modifier la table des droits, etc. La carte additionnelle trouvée ou volée n'est pas utilisable comme un trousseau de clés trouvé ou volé, puisque selon l'invention, l'utilisateur ayant mis en oeuvre la carte, ou à défaut le terminal mobile ayant reçu la carte, peut être déterminé.

Bien que l'invention ait été décrite en référence à une application domotique, celle-ci peut être mise en oeuvre dans d'autres domaines d'application.

Par exemple, la vérification de l'authentification du terminal mobile et également de l'authentification de l'usager UP offrent un niveau de confiance supplémentaire à un organisme bancaire lorsqu'une opération est effectuée à distance. L'organisme bancaire vérifie alors que le terminal mobile depuis lequel est passé un ordre de transaction est celui qui a été déclaré lors de la souscription au service bancaire et qu'il est utilisé par un usager autorisé et non par un tiers ayant trouvé, par hasard ou non, le terminal mobile. De son côté, l'usager UP n'a pas à mémoriser un mot de passe d'accès au service et bénéficie pleinement de l'ergonomie apportée par le processus biométrique E0 à E3.

## Revendications

1. Procédé pour établir un appel sortant depuis un terminal mobile (TM) d'un usager (UP) dans un réseau de radiotéléphonie (RR) vers un deuxième terminal (TRC), comprenant une authentification du terminal mobile par des moyens d'enregistrement fixes (VLR, HLR, AUC) dans le réseau de radiotéléphonie, et un appel (E21) du deuxième terminal par les moyens fixes, **caractérisé en ce qu'**il comprend une application (E3) du résultat (RAB) d'une authentification biométrique (E0-E2) de l'usager (UP) dans le terminal mobile (TM) et d'un résultat prédéterminé (RAB) respectivement à des algorithmes identiques (AUM) de l'authentification (E5-E13) du terminal mobile implémentés respectivement dans le terminal mobile et les moyens fixes, une comparaison (E11) dans les moyens fixes d'une signature (SRESB) produite par l'algorithme dans le terminal mobile et transmise par celui-ci à un résultat de signature (RTSRESB) produit par l'algorithme dans les moyens fixes, une transmission (E27) d'un identifiant (IDTM) du terminal mobile (TM) depuis les moyens fixes au deuxième terminal appelé (TRC) seulement lorsque la signature (SRESB) et le résultat (RTSRESB) comparés sont identiques (E11), et une identification (E30) du terminal mobile (TM) par le deuxième terminal (TRC) afin que le deuxième terminal n'accepte l'appel sortant que lorsque le deuxième terminal a reconnu l'identifiant transmis (IDTM).

2. Procédé conforme à la revendication 1, selon lequel l'authentification (E5-E13) du terminal mobile (TM) par les moyens fixes (VLR, HLR, AUC) n'est pas effectuée lorsque l'authentification biométrique a échoué (E2, non).

3. Procédé conforme à la revendication 1 ou 2, selon lequel l'authentification biométrique (E0-E2) est effectuée après composition ou sélection du numéro d'appel (NTRC) du deuxième terminal (TRC) dans le terminal mobile (TM).

4. Procédé conforme à l'une quelconque des revendications 1 à 3, selon lequel le résultat (RAB) de l'authentification biométrique, une clé d'authentification (Ki) mémorisée dans le terminal mobile (TM) et un nombre aléatoire (RAND) transmis par les moyens fixes (VLR, HLR, AUC) au terminal mobile (TM) sont appliqués à l'algorithme (AUM) de l'authentification du terminal mobile.

5. Procédé conforme à l'une quelconque des revendications 1 à 4, comprenant une authentification (E14-E18) du terminal mobile (TM) par les moyens fixes (VLR, HLR, AUC) indépendante du résultat (RAB) de l'authentification biométrique (E0-E2) et parallèle à l'authentification (E5-E13) dépendant du résultat (RAB) de l'authentification biométrique.

6. Procédé conforme à l'une quelconque des revendications 1 à 5, selon lequel la transmission (E27) de l'identifiant (IDTM) est sécurisée par des algorithmes de cryptographie (AC) à clés asymétriques (KR, KU) implémentés dans les moyens fixes (VLR, HLR, AUC) et le deuxième terminal (TRC).

7. Procédé conforme à la revendication 6, selon lequel les algorithmes de cryptographie (AC) dépendent d'une variable aléatoire (VA) transmise de l'un des moyens fixes (VLR, HLR, AUC) et deuxième terminal (TRC) vers l'autre, ou générée dans les moyens fixes et le deuxième terminal.

8. Procédé conforme à l'une quelconque des revendications 1 à 5, selon lequel la transmission (E27) de l'identifiant (IDTM) est sécurisée par des algorithmes de cryptographie (HA) à clés symétriques (KR) implémentés dans les moyens fixes (VLR, HLR, AUC) et le deuxième terminal (TRC).

9. Procédé conforme à l'une quelconque des revendications 1 à 8, selon lequel le résultat (RAB) de l'authentification biométrique (E0-E2) n'est produit que lorsque la plus grande des similarités entre une empreinte (EB) captée par le terminal mobile (TM) et des références biométriques (RB) prémémorisées dans le terminal mobile est supérieure à un seuil prédéterminé.

10. Procédé conforme à l'une quelconque des revendications 1 à 9, selon lequel le deuxième terminal (TRC) contient une table (TAB) ayant prémémorisé plusieurs identifiants (IDUT) de terminaux mobiles prédéterminés (TMUT), et accepte (E30) l'appel sortant en réponse à l'un des identifiants transmis par les moyens fixes (VLR, HLR, AUC).

11. Procédé conforme à la revendication 10, selon lequel la table (TAB) dans le deuxième terminal (TRC) fait correspondre à l'identifiant (IDUT) de chaque terminal mobile prédéterminé (TMUT) une capacité d'accès (CA) afin de n'accepter (E32) une commande (COM) transmise par le terminal mobile prédéterminé que lorsque la commande appartient à la capacité d'accès.

12. Procédé conforme à la revendication 10 ou 11, selon lequel la table (TAB) dans le deuxième terminal (TRC) fait correspondre à l'identifiant (IDUT) de chaque terminal mobile prédéterminé une plage horaire respective (PHUT) afin de n'accepter (E30b) un appel sortant du terminal mobile prédéterminé en réponse à l'identifiant de celui-ci transmis que pendant la plage horaire correspondante.

13. Procédé conforme à l'une quelconque des revendications 1 à 12, selon lequel la transmission de l'identifiant de terminal mobile depuis les moyens fixes après l'appel du deuxième terminal est remplacée par une connexion (DE2) du terminal mobile (TM, TMUT) et du deuxième terminal (TRC) à travers les moyens fixes (VLR, HLR, AUC), une vérification (DE3) de la présence d'une carte additionnelle amovible (CR) dans le terminal mobile (TM) par le deuxième terminal (TRC), et la transmission (DE5, E27) d'un identifiant (IDCR) de la carte additionnelle depuis le terminal mobile au deuxième terminal afin que le deuxième terminal (TRC) identifie le terminal mobile en fonction de l'identifiant de carte (IDCA) transmis.

14. Procédé conforme à la revendication 13, selon lequel des droits d'accès (TAB) dans le deuxième terminal (TRC) ne sont modifiés qu'en réponse à un identifiant (IDTM) d'un terminal prédéterminé (TM) transmis par les moyens fixes (VLR, HLR, AUC).

15. terminal radiotéléphonique mobile (TM) d'un usager (UP) dans un réseau de radiotéléphonie (RR) pour la mise en oeuvre du procédé conforme à l'une quelconque des revendications 1 à 14 pour établir un appel sortant, comprenant un moyen (CB, SIM) d'authentification biométrique de l'usager, **caractérisé par** un moyen (SIM) d'implémentation d'un algorithme (AUM) de l'authentification du terminal mobile par le réseau auquel un résultat (RAB) de l'authentification biométrique de l'usager (UP), une clé prémémorisée (Ki) et un nombre aléatoire (RAND) qui est transmis par le réseau sont appliqués afin de transmettre une signature (SRESB) au réseau (RR).

16. Moyens d'enregistrement fixes (VLR, HLR, AUC) dans un réseau de radiotéléphonie pour mettre en oeuvre le procédé conforme à l'une quelconque des revendications 1 à 14, pour établir un appel sortant depuis un terminal mobile (TM) d'un usager (UP) dans le réseau de radiotéléphonie (RR) vers un deuxième terminal (TRC) à travers les moyens fixes, **caractérisés par** un moyen (AUC) d'implémentation d'un algorithme (AUM) de l'authentification du terminal mobile auquel un résultat prédéterminé (RAB) dépendant d'une authentification biométrique de l'usager (UP), une clé prémémorisée (Ki) et un nombre aléatoire (RAND) transmis par les moyens fixes au terminal mobile (TM) sont appliqués afin de comparer une signature (SRESB) transmise par le terminal mobile à un résultat de signature (RTSRESB) produit par l'algorithme et d'appeler le deuxième terminal lorsque la signature et le résultat de signature sont identiques et un moyen pour transmettre un identifiant du terminal mobile au deuxième terminal après l'appel de celui-ci.

17. Deuxième terminal (TRC) pour mettre en oeuvre le procédé conforme à l'une quelconque des revendications 1 à 14 pour établir un appel sortant depuis un terminal mobile (TM) d'un usager (UP) dans un réseau de radiotéléphonie (RR), **caractérisé par** un moyen pour identifier le terminal mobile en fonction d'un identifiant (IDTM) du terminal mobile transmis par des moyens d'enregistrement fixes (VLR, HLR, AUC) dans le réseau de radiotéléphonie, après une authentification biométrique de l'usager (UP) dans le terminal mobile (TM) et une authentification (E5-E13) du terminal mobile par les moyens fixes, afin de n'accepter l'appel sortant que lorsque le deuxième terminal a reconnu l'identifiant transmis (IDTM, IDCR).

## Claims

1. A method of setting up an outgoing call from a mobile terminal (TM) of a user (UP) in a radio telephone network (RR) to a second terminal (TRC), including authentication of the mobile terminal by fixed storage means (VLR, HLR, AUC) in the radio telephone network, and call (E21) from the fixed means to the second terminal, **characterized in that** it includes application (E3) of the result (RAB) of biometric authentication (E0-E2) of the user (UP) in the mobile terminal (TM) and of a predetermined result (RAB) respectively to identical algorithms (AUM) for authenticating (E5-E13) the mobile terminal respectively implemented in the mobile terminal and the fixed means, comparison (E11) in the fixed means of a signature (SRESB) produced by the algorithm in the mobile terminal and transmitted by the latter and a signature result (RTSRESB) produced by the algorithm in the fixed means, transmission (E27) of an identifier (IDTM) of the mobile terminal (TM) from the fixed means to the called second terminal (TRC) only if the signature (SRESB) and the result (RTSRESB) compared are identical (E11), and identification (E30) of the mobile terminal (TM) by the second terminal (TRC) in order for the second terminal to accept the outgoing call only when the second terminal has recognized the identifier (IDTM) transmitted.

2. A method according to claim 1, wherein authentication (E5-E13) of the mobile terminal (TM) by the fixed means (VLR, HLR, AUC) is not effected if biometric authentication fails (E2, no).

3. A method according to claim 1 or 2, wherein biometric authentication (E0-E2) is effected after entering or selecting the call number (NTRC) of the second terminal (TRC) in the mobile terminal (TM).

4. A method according to any one of claims 1 to 3, wherein the result (RAB) of biometric authentication, an authentication key (Ki) stored in the mobile terminal (TM), and a random number (RAND) transmitted by the fixed means (VLR, HLR, AUC) to the mobile terminal (TM) are fed to the algorithm (AUM) for authenticating the mobile terminal.

5. A method according to any one of claims 1 to 4, including authentication (E14-E18) of the mobile terminal (TM) by the fixed means (VLR, HLR, AUC) independently of the result (RAB) of the biometric authentication (E0-E2) and in parallel with the authentication (E5-E13) depending on the result (RAB) of biometric authentication.

6. A method according to any one of claims 1 to 5, wherein transmission (E27) of the identifier (IDTM) is secured by cryptography algorithms (AC) using asymmetric keys (KR, KU) and implemented in the fixed means (VLR, HLR, AUC) and the second terminal (TRC).

7. A method according to claim 6, wherein the cryptography algorithms (AC) depend on a random variable (VA) transmitted from one of the fixed means (VLR, HLR, AUC) and second terminal (TRC) to the other, or generated in the fixed means and the second terminal.

8. A method according to any one of claims 1 to 5, wherein transmission (E27) of the identifier (IDTM) is secured by cryptography algorithms (HA) using symmetrical keys (KR) and implemented in the fixed means (VLR, HLR, AUC) and the second terminal (TRC).

9. A method according to any one of claims 1 to 8, wherein the result (RAB) of the biometric authentication (E0-E2) is produced only if the greatest similarity between a print (EB) sensed by the mobile terminal (TM) and biometric references (RB) pre-stored in the mobile terminal is more than a predetermined threshold.

10. A method according to any one of claims 1 to 9, wherein the second terminal (TRC) contains a table (TAB) for pre-storing a plurality of identifiers (IDUT) of predetermined mobile terminals (TMUT), and accepts (E30) the outgoing call in response to one of the identifiers transmitted by the fixed means (VLR, HLR, AUC).

11. A method according to claim 10, wherein the table (TAB) in the second terminal (TRC) matches to the identifier (IDUT) of each predetermined mobile terminal (TMUT) an access capacity (CA) in order to accept (E32) a command (COM) transmitted by the predetermined mobile terminal only if the command belongs to the access capacity.

12. A method according to claim 10 or 11, wherein the table (TAB) in the second terminal (TRC) matches to the identifier (IDUT) of each predetermined mobile terminal a respective time period (PHUT) in order to accept (E30b) only during the corresponding time period an outgoing call from the predetermined mobile terminal in response to the identifier thereof transmitted.

13. A method according to any one of claims 1 to 12, wherein the transmission of the identifier of the mobile terminal from the fixed means after the call to the second terminal is replaced by connection (DE2) of the mobile terminal (TM, TMUT) and the second terminal (TRC) via the fixed means (VLR, HLR, AUC), verification (DE3) of the presence of a removable additional card (CR) in the mobile terminal (TM) by the second terminal (TRC), and transmission (DE5, E27) of an identifier (IDCR) of the additional card from the mobile terminal to the second terminal in order for the second terminal (TRC) to identify the mobile terminal as a function of the card identifier (IDCA) transmitted.

14. A method according to claim 13, wherein access rights (TAB) in the second terminal (TRC) are modified only in response to an identifier (IDTM) of a predetermined terminal (TM) transmitted by the fixed means (VLR, HLR, AUC).

15. A mobile radio telephone terminal (TM) of a user (UP) in a radio telephone network (RR) for implementing the method according to any one of claims 1 to 14, for setting up an outgoing call, including means (CB, SIM) for biometric authentication of the user, **characterized by** means (SIM) for implementing an algorithm (AUM) for authentication of the mobile terminal by the network to which a result (RAB) of biometric authentication of the user (UP), a pre-stored key (Ki), and a random number (RAND) which is transmitted by the network are fed in order to transmit a signature (SRESB) to the network (RR).

16. A fixed storage means (VLR, HLR, AUC) in a radio telephone network (RR) for implementing the method according to any one of claims 1 to 14, for setting up an outgoing call from a mobile terminal (TM) of a user (UP) in the radio telephone network (RR) to a second terminal (TRC) via the fixed means, **characterized by** means (AUC) for implementing an algorithm (AUM) for authenticating the mobile terminal to which are fed a predetermined result (RAB) depending on biometric authentication of the user (UP), a pre-stored key (Ki) and a random number (RAND) transmitted by the fixed means to the mobile terminal (TM) in order to compare a signature (SRESB) transmitted by the mobile terminal to a signature result (RTSRESB) produced by the algorithm and to call the second terminal if the signature and the signature result are identical and means for transmitting an identifier (IDTM) of the mobile terminal (TM) to the second terminal (TRC) after calling it.

17. A second terminal (TRC) for implementing the method according to any one of claims 1 to 14 for setting up an outgoing call from a mobile terminal (TM) of a user (UP) in a radio telephone network (RR), **characterized by** means for identifying the mobile terminal as a function of an identifier (IDTM) of the mobile terminal transmitted by fixed storage means (VLR, HLR, AUC) in the radio telephone network, after a biometric authentication of the user (UP) in the mobile terminal (TM) and an authentication (E5-E13) of the mobile terminal by the fixed means, in order to accept the outgoing call only if the second terminal has recognized the identifier (IDTM, IDCR) transmitted.

## Patentansprüche

1. Verfahren zum Herstellen einer Verbindung von einem mobilen Endgerät (TM) eines Benutzers (UP) in einem Funknetz (RR) zu einem zweiten Endgerät (TRC) mit einer Authentifizierung des mobilen Endgeräts durch feste Registrierungsmittel (VLR, HLR, AUC) in dem Funknetz und einer Verbindung (E21) des zweiten Endgeräts durch die festen Mittel, **dadurch gekennzeichnet, daß** es eine Anwendung (E3) des Ergebnisses (RAB) einer biometrischen Authentifizierung (E0-E2) des Benutzers (UP) in dem mobilen Endgerät (TM) bzw. eines vorbestimmten Ergebnisses (RAB) auf identische Algorithmen (AUM) der Authentifizierung (E5-E13) des mobilen Endgeräts, die in dem mobilen Endgerät bzw. den festen Mitteln implementiert sind, einen Vergleich (E11) in den festen Mitteln einer von dem Algorithmus in dem mobilen Endgerät erzeugten und von ihm übertragenen Signatur (SRESB) mit einem von dem Algorithmus in den festen Mitteln erzeugten Signaturergebnis (RTSRESB), eine Übertragung (E27) einer Kennung (IDTM) des mobilen Endgeräts (TM) von den festen Mitteln zu dem gerufenen zweiten Endgerät (TRC) nur dann, wenn die verglichene Signatur (SRESB) und das Ergebnis (RTSRESB) identisch sind (E11), und eine Identifikation (E30) des mobilen Endgeräts (TM) durch das zweite Endgerät (TRC), so daß das zweite Endgerät die abgehende Verbindung nur dann annimmt, wenn das zweite Endgerät die übertragene Kennung (IDTM) erkannt hat, umfaßt.

2. Verfahren nach Anspruch 1, wonach die Authetifizierung (E5-E13) des mobilen Endgeräts (TM) durch die festen Mittel (VLR, HLR, AUC) nicht ausgeführt wird, wenn die biometrische Authentifizierung mißlungen ist (E2, nein).

3. Verfahren nach Anspruch 1 oder 2, wonach die biometrische Authentifizierung (E0-E2) nach Zusammenstellung oder Auswahl der Rufnummer (NTRC) des zweiten Endgeräts (TRC) in dem mobilen Endgerät (TM) bewirkt wird.

4. Verfahren nach einem beliebigen der Ansprüche 1 bis 3, wonach das Ergebnis (RAB) zur biometrischen Authentifizierung, ein im mobilen Endgerät (TM) gespeicherter Authentifizierungsschlüssel (Ki) und eine von den festen Mitteln (VLR, HLR, AUC) zum mobilen Endgerät (TM) übertragene Zufallszahl (RAND) an den Authentifizierungsalgorithmus (AUM) des mobilen Endgeräts angelegt werden.

5. Verfahren nach einem beliebigen der Ansprüche 1 bis 4, mit einer Authentifizierung (E14-E18) des mobilen Endgeräts (TM) durch die festen Mittel (VLR, HLR, AUC), die unabhängig von dem Ergebnis (RAB) der biometrischen Authentifizierung (E0-E2) und parallel zu der vom Ergebnis (RAB) der biometrischen Authentifizierung abhängigen Authentifizierung (E5-E13) ist.

6. Verfahren nach einem beliebigen der Ansprüche 1 bis 5, wonach die Übertragung (E27) der Kennung (IDTM) durch kryptographische Algorithmen (AC) mit asymmetrischen Schlüsseln (KR, KU) gesichert wird, die in den festen Mitteln (VLR, HLR, AUC) und dem zweiten Endgerät (TRC) implementiert sind.

7. Verfahren nach Anspruch 6, wonach die kryptographischen Algorithmen (AC) von einer Zufallsvariablen (VA) abhängig sind, die von einem der festen Mittel (VLR, HLR, AUC) und zweitem Endgerät (TRC) zum anderen übertragen oder in den festen Mitteln und dem zweiten Endgerät erzeugt werden.

8. Verfahren nach einem beliebigen der Ansprüche 1 bis 5, wonach die Übertragung (E27) der Kennung (IDTM) durch kryptographische Algorithmen (HA) mit symmetrischen Schlüsseln (KR) gesichert ist, die in den festen Mitteln (VLR, HLR, AUC) und dem zweiten Endgerät (TRC) implementiert sind.

9. Verfahren nach einem beliebigen der Ansprüche 1 bis 8, wonach das Ergebnis (RAB) der biometrischen Authentifizierung (E0-E2) nur dann erzeugt wird, wenn die größere der Ähnlichkeiten zwischen einem vom mobilen Endgerät (TM) erfaßten Abdruck (EB) und den im mobilen Endgerät vorgespeicherten biometrischen Referenzen (RB) größer als ein vorbestimmter Schwellwert ist.

10. Verfahren nach einem beliebigen der Ansprüche 1 bis 9, wonach das zweite Endgerät (TRC) eine Tabelle (TAB) enthält, in der mehrere vorbestimmte Kennungen (IDUT) von mobilen Endgeräten (TMUT) vorgespeichert sind, und die abgehende Verbindung (E30) als Reaktion auf eine der von den festen Mitteln (VLR, HLR, AUC) übertragenen Kennungen annimmt.

11. Verfahren nach Anspruch 10, wonach die Tabelle (TAB) im zweiten Endgerät (TRC) der Kennung (IDUT) jedes vorbestimmten mobilen Endgeräts (TMUT) eine Zugangskapazität (CA) zuordnet, um einen vom vorbestimmten mobilen Endgerät übertragenen Befehl (COM) nur dann anzunehmen (E 32), wenn der Befehl zu der Zugangskapazität gehört.

12. Verfahren nach Anspruch 10 oder 11, wonach die Tabelle (TAB) im zweiten Endgerät (TRC) der Kennung (IDUT) jedes vorbestimmten mobilen Endgeräts einen jeweiligen Zeitbereich zuordnet, um einen vom vorbestimmten mobilen Endgerät abgehenden Ruf (E 30b) als Reaktion auf die übertragene Kennung desselben nur während des entsprechenden Zeitbereichs anzunehmen.

13. Verfahren nach einem beliebigen der Ansprüche 1 bis 12, wonach die Übertragung der Kennung des mobilen Endgeräts von den festen Mitteln nach dem Ruf des zweiten Endgeräts durch eine Verbindung (DE2) des mobilen Endgeräts (TM, TMUT) und des zweiten Endgeräts (TRC) über die festen Mittel (VLR, HLR, AUC), eine Überprüfung (DE3) des Vorhandenseins einer zusätzlichen stationären Karte (CR) im mobilen Endgerät (TM) durch das zweite Endgerät (TRC) und die Übertragung (DES, E27) einer Kennung (IDCR) der zusätzlichen Karte vom mobilen Endgerät zum zweiten Endgerät ersetzt wird, damit das zweite Endgerät (TRC) das mobile Endgerät in Abhängigkeit von der übertragenen Kartenkennung (IDCA) identifiziert.

14. Verfahren nach Anspruch 13, wonach die Zugriffsrechte (TAB) im zweiten Endgerät (TRC) nur als Reaktion auf eine von den festen Mitteln (VLR, HLR, AUC) übertragene Kennung (IDTM) eines vorbestimmten Endgeräts (TM) abgeändert werden.

15. Mobilfunk-Endgerät (TM) eines Benutzers (UP) in einem Funknetz (RR) zur Ausführung des Verfahrens nach einem beliebigen der Ansprüche 1 bis 14 zur Herstellung einer abgehenden Verbindung, mit einem Mittel (CB, SIM) zur biometrischen Authentifizierung des Benutzers, **gekennzeichnet durch** ein Mittel (SIM) zur Implementierung eines Algorithmus (AUM) zur Authentifizierung des mobilen Endgeräts **durch** das Netz, an das ein Ergebnis (RAB) der biometrischen Authentifizierung des Benutzers (UP), ein vorgespeicherter Schlüssel (Ki) und eine Zufallszahl (RAND), die vom Netz übertragen wird, angelegt werden, um eine Signatur (SRESB) zum Netz (RR) zu übertragen.

16. Feste Registrierungsmittel (VLR, HLR, AUC) in einem Funknetz zur Ausführung des Verfahrens nach einem beliebigen der Ansprüche 1 bis 14 zur Herstellung einer abgehenden Verbindung von einem mobilen Endgerät (TM) eines Benutzers (UP) in dem Funknetz (RR) zu einem zweiten Endgerät (TRC) über die festen Mittel, **gekennzeichnet durch** ein Mittel (AUC) zur Implementierung eines Algorithmus (AUM) der Authentifizierung des mobilen Endgeräts, an das ein von einer biometrischen Authentifizierung des Benutzers (UP) abhängiges vorbestimmtes Ergebnis (RAB), ein vorgespeicherter Schlüssel (Ki) und eine von den festen Mitteln zum mobilen Endgerät (TM) übertragene Zufallszahl (RAND) angelegt werden, um eine vom mobilen Endgerät übertragene Signatur (SRESB) mit einem vom Algorithmus erzeugten Signaturergebnis (RTSRESB) zu vergleichen und das zweite Endgerät anzurufen, wenn die Signatur und das Signaturergebnis identisch sind, und ein Mittel zum Übertragen einer Kennung des mobilen Endgeräts zum zweiten Endgerät nach dem Ruf desselben.

17. Zweites Endgerät (TRC) zur Ausführung des Verfahrens nach einem beliebigen der Ansprüche 1 bis 14 zur Herstellung einer abgehenden Verbindung von einem mobilen Endgerät (TM) eines Benutzers (UP) in einem Funknetz (RR), **gekennzeichnet durch** ein Mittel zur Identifizierung des mobilen Endgeräts in Abhängigkeit von einer von den festen Registrierungsmitteln (VLR, HLR, AUC) im Funknetz übertragenen Kennung (IDTM) des mobilen Endgeräts nach einer biometrischen Authentifizierung des Benutzers (UP) im mobilen Endgerät (TM) und einer Authentifizierung (E5-E13) des mobilen Endgeräts **durch** die festen Mittel, um die abgehende Verbindung nur dann anzunehmen, wenn das zweite Endgerät die übertragene Kennung (IDTM, IDCR) erkannt hat.
